# EUROPEAN PATENT SPECIFICATION

(11) **EP 4 104 074 B1**
(45) Date of publication and mention of the grant of the patent: **27.08.2025**
(21) Application number: 20919246.7
(22) Date of filing: 15.02.2020
(51) Int. Cl.: H04L 41/0806, H04L 41/08, H04L 41/22, G06F 16/95, H04L 41/0893, H04L 41/0273

(54) **HIGH EFFICIENCY REMOTE PROCEDURE CALL FOR CPE DEVICES**
HOCHEFFIZIENTER FERNPROZEDURAUFRUF FÜR CPE-VORRICHTUNGEN
APPEL DE PROCÉDURE À DISTANCE À HAUT RENDEMENT POUR DISPOSITIFS CPE

(43) Date of publication of application: 21.12.2022
(73) Proprietor: ARRIS Enterprises LLC, Suwanee Georgia 30024 (US)
(72) Inventor: WU, Yonghui, Shenzhen, Guangdong 518101 (CN)
(74) Representative: Murgitroyd & Company
(86) International application number: PCT/CN2020/075443
(87) International publication number: WO 2021/159543

(56) References cited:
- CN-A- 107 526 803
- CN-A- 107 526 803
- CN-A- 108 737 201
- CN-A- 108 737 201
- CN-B- 103 488 696
- US-A1- 2009 225 681
- US-A1- 2011 296 444
- US-A1- 2015 146 721
- US-B1- 7 181 360
- JENS JOHANN (DTAG): "Remote Management and Firmware Update System for DVB IPTV Services (phase2) (IPv6 updates)", no. r2, 21 May 2015 (2015-05-21), XP017846297, Retrieved from the Internet <URL:(Old): https://www.dvb.org/resources/restricted/members/documents/TM/TM4289r2_Remote-Management-and-Firmware-Update-System-for-DVB-IPTV-Services-phase2-IPv6-updates.docx> [retrieved on 20150521]
- WICH KLAUS ET AL: "TR-069 CPE WAN Management Protocol", BROADBAND-FORUM TECHNICAL REPORT, 1 March 2018 (2018-03-01), pages 1 - 276, XP055851620, Retrieved from the Internet <URL:https://www.broadband-forum.org/technical-reports> [retrieved on 20211015]

## Description

### CROSS-REFERENCE TO RELATED APPLICATIONS

### BACKGROUND OF THE INVENTION

The present invention relates to an efficient network management.

It has become desirable to permit consumer premises equipment (CPEs), such as set-up boxes, voice-over IP devices, laptops, modems, routers, gateways, etc., to be remotely configured via a network by using an auto configuration server. The communication between the auto configuration server (ACS) and the consumer premises equipment typically use a predefined protocol. There exist several protocols to do remote management, such as for example a Technical Report 069 protocol (TR-069 protocol).

The TR-069 protocol is The Broadband Forum technical specification entitled CPE WAN Management Protocol (CWMP) vl.l (Issue 1, Amendment 2, November 2007). The TR-069 protocol defines the communication between a CPE and an ACS by defining an application layer protocol for remote management of end user devices. TR-069 includes both auto configuration and control of other CPE management functions within an integrated framework. The TR-069 protocol consists of an object model in which remote procedure calls (RPC's) are invoked for bidirectional communication between a CPE device and an ACS.

In the TR-069 protocol a session or transaction session is defined as a contiguous sequence of transactions between a CPE and an ACS, where a session may span multiple TCP connections. A transaction is defined as a message exchange between a CPE and an ACS consisting of a single request followed by a single response, initiated either by the CPE or by the ACS. However, the transaction between the CPE and the ACS may result in excessive data and complexity, which is prone to errors.

### SUMMARY

The present invention is defined in the appended independent claim 1 to which reference should be made. Advantageous features are set out in the appended dependent claims.

The foregoing and other objectives, features, and advantages of the invention will be more readily understood upon consideration of the following detailed description of the invention, taken in conjunction with the accompanying drawings.

US patent application publication US2009/0225681A1 discloses a method and apparatus for configuring and managing customer premises equipment.

### BRIEF DESCRIPTION OF THE SEVERAL VIEWS OF THE DRAWINGS

FIG. 1 illustrates an auto configuration server and consumer premises equipment.
FIG. 2 illustrates a communication protocol between the auto configuration server and the consumer premises equipment.
FIG. 3 illustrates a transaction between an ACS and a CPE.
FIG. 4 illustrates a configuration interface.
FIG. 5 illustrates a modified configuration interface.

### DETAILED DESCRIPTION OF PREFERRED EMBODIMENT

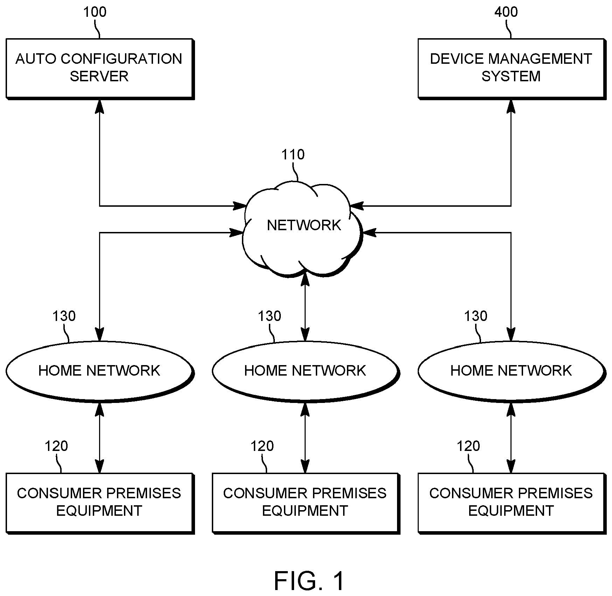

Referring to FIG. 1, a communication system with an auto configuration server (ACS) 100, communicates across a network 110 and is adapted to manage respective consumer premises equipment (CPEs) 120. Respective consumer premises equipment (CPEs) 120 may be coupled to the network 110 over a respective home network 130, such as a respective wireless network. When the consumer premises equipment (CPEs) 120 wants to communicate with the ACS 100 or the ACS 100 wants to communicate with the consumer premises equipment (CPEs) 120, a TR-069 session is initiated between the two.

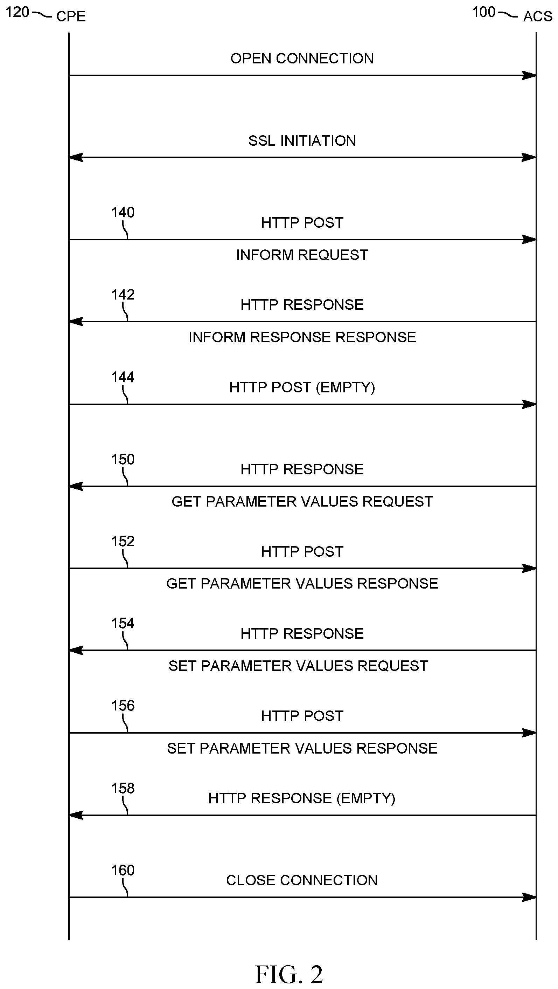

Referring to FIG. 2, an exemplary set of remote procedure calls (RPC's) is illustrated. The communication between the auto configuration server 100 and the consumer premises equipment (CPEs) 120 may be set up with a RPC Inform 140 method from the CPE 120 to initiate a transaction sequence, a RPC InformResponse 142 method from the ACS 100 to indicate the ACS wishes to allow the initiation of the session, and a RPC empty HTTP POST 144 method from the CPE 120.

The ACS 100 may seek to obtain information from the CPE 120 by a GetParameterValues 150 method. The GetParameterValues method requests the value of one or more CPE parameters. The GetParameterValues may include an argument ParameterNames that has an associated type that is an array of strings, each representing the name of a requested parameter. If a parameter name argument is given as a partial path name, the request is to be interpreted as a request to return all of the parameters in the branch of the naming hierarchy that shares the same prefix as the argument. A partial path name ends with a "." (dot) after the last node name in the hierarchy. An empty string indicates the top of the name hierarchy. If OPTIONAL instance wildcards are used in a parameter name the request is interpreted as to return all the parameters of all existing instances, which match the requested parameter name. An instance wildcard may be combined with a partial path name. A full parameter name may be, for example, "Device.DeviceInfo.SerialNumber". A partial parameter name may be, for example, "Device.DeviceInfo.".

The CPE 120 may respond with a GetParameterValuesResponse 152 method. The GetParameterValuesResponse method provdes the value of one or more CPE parameters. The GetParameterValuesResponse method may include an argument ParameterList that has an associated type that is an array of name-value pairs containing the name and value for each requested parameter. If multiple entries in the array in the GetParameterValues request overlap such that there are multiple requests for the same Parameter value, it is at the discretion of the CPE whether or not to duplicate that Parameter in the response array. That is, the CPE may either include that Parameter value only once in its response, or it may include that Parameter value once for each instance that it was requested. If the argument in the request was a partial path name, and if there are no parameters within the object represented by that partial path name (at any level below), the response is empty, and does not cause an error response.

The ACS 100 may respond with a SetParameterValues 154 method. The SetParameterValues method requests modification of the value of one or more CPE parameters. The SetParameterValues may include a pair of arguments, namely, ParameterList that is an array of name-value pairs where for each name-value pair the CPE is instructed to set the parameter specified by the name argument to the corresponding value and if length of the array is zero then the CPE sets the a ParameterKey to the value sepecified by a ParameterKey argument.

The CPE 120 may respond with a SetParameterValuesResponse 156 method. The SetParameterValuesResponse 156 method indicates that all parameter changes have been (1) validated and (2) either applied or committed.

A RPC empty HTTP response 158 method from the ACS 100 may be followed by a Close connection 160 by the CPE 120.

The association between the CPE and the ACS tends to be complicated. In particular, setting some of the parameters tend to be complicated. In particular, often a data model is used to define the functionality of particular consumer premises equipment. One exemplary data mode is a TR-069 protocol is entitled an Internet Gateway Device Data Model for TR-069 (November 2006). An exemplary EDGE ACS script to call SetParameterValues RPC, which is ACS dependent, using a TR-069 protocol communication using a TR-068 data model for an internet gateway device may be as follows, where the ACS translates the script into TR-069 transaction similar to that shown in FIG. 2:

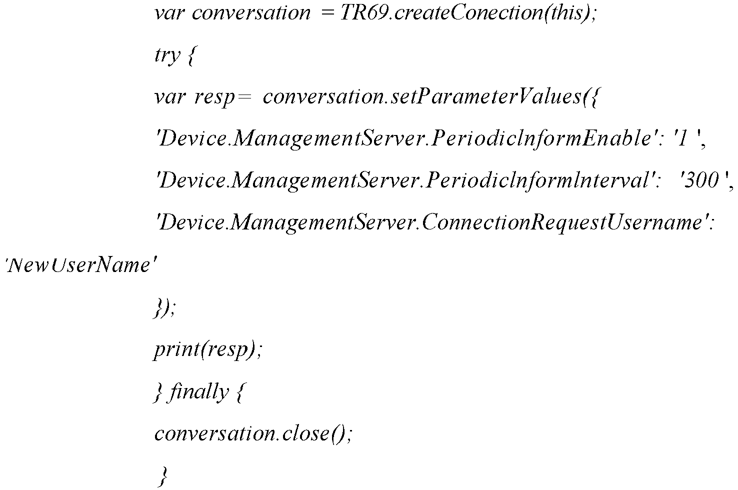

Other ACS may use a different format as desired.

The variable "conversation" is set to create a TR69 connection.

The "try {" statement executed code allows the definition of a block of code to be tested for errors while it is being executed.

The "finally {" statement executed code, after a try and catch, executes the code regardless of the result. It is noted that the syntax above does not include a "catch" statement. In this case, after the "try {" statement block of code, the TR69 connection is closed by "conversation.close();".

The variable "resp" is set to conversation.setParameterValues by "var resp = conversation.setParameterValues". In this manner, the variable "resp" is set to a creation of a TR69 connection and institution of a setParameterValues method. The setParameterValues method includes a set of name value pairs separated by commas.

The setParameterValues method includes pairs of arguments, namely, an array of name-value pairs where for each name-value pair the CPE is instructed to set the parameter specified by the name argument to the corresponding value.

The first name-value pair is
'Device.ManagementServer.PeriodicInformEnable': "1".

The "Device" (or InternetGatewayDevice) identifies the particular consumer premises equipment.

The ManagementServer identifies the ACS management server.

Accordingly, "Device.ManagementServer" contains parameters relating to a particular CPE's association with a particulr ACS.

PeriodicInformEnable has a Boolean type that indicates whether or not the CPE (e.g., Device) must periodically send CPE information to the ACS (e.g., ManagementServer) using the Inform method call. A type of TR69.Bool(true) (e.g., 'Device.ManagementServer.PeriodicInformEnable': TR69.Bool(true)) or TR69.Bool(false) (e.g., 'Device.ManagementServer.PeriodicInformEnable': TR69.Bool(false)) may be used together with PeriodicInformEnable, but such a syntax tends to be complex in nature and prone to error. Rather than using the Bool(true) or the Bool(false) data type, it is preferable to include a string of '1' to indicate true and to include a string of '0' to indicate false.

'Device.ManagementServer.PeriodicInformInterval' has an unsignedInt[1:] type, namely an unsigned integer with a defined minimum and no maximum limit, that indicates a duration in seconds of the interval for which the CPE must attempt to connect with the ACS and call the Inform method if PeriodicInformEnable is true. A type of TR69.UInt(300) (e.g., 'Device.ManagementServer.PeriodicInformInterval': TR69.UInt(300)) may be used, with 300 being any suitable unsigned integer, but such a syntax tends to be complex in nature and prone to error. Rather than using the unsignedInt[1:] (e.g., UInt) data type, it is preferable to include a string of '300' to indicate the minimum duration with no limit on the maximum duration, where '300' may be replaced with a different numerical unsigned integer number.

'Device.ManagementServer.ConnectionRequestUsername': 'NewUserName' has a string type that includes a username used to authenticate the ACS making a connection request to the CPE.

For example, the GetParameterValues method may be used to determine the parameter types for the setParameterValues method. Then the setParameterValues method may be subsequently used based upon such parameter types, which may be cached by the ACS.

In the case of the ACS using GetParametersValues method on the root object "Device." for the CPE, the CPE should return all the device's parameters to the ACS in its response, namely, GetParameterValuesResponse method. The GetParameterValuesResponse method may respond with a very substantial number of parameters from the CPE, such as in excess of 7,500 parameters for particular CPEs. To provide the GetParameterValuesResponse method, the CPE initially gathers up all the parameters on its CPE. In many cases it may take the CPE well in excess of 30 seconds and in some cases well in excess of 60 seconds, especially for GetParametersValues method on the root object, to gather together all the parameters on the CPE. After gathering together the parameters, the CPE provides them in the GetParameterValuesResponse method to the ACS. Unfortunately, in many cases the ACS will time out prior to the response method being provided when the response method is sufficiently temporally delayed, thereby the ACS will not receive the results of the GetParameterValuesResponse method. Further, gathering together all, or a sufficient number, of the parameters of the CPE may exhaust the resources of the CPE causing either the GetParameterValuesResponse method to fail or otherwise the CPE itself to fail.

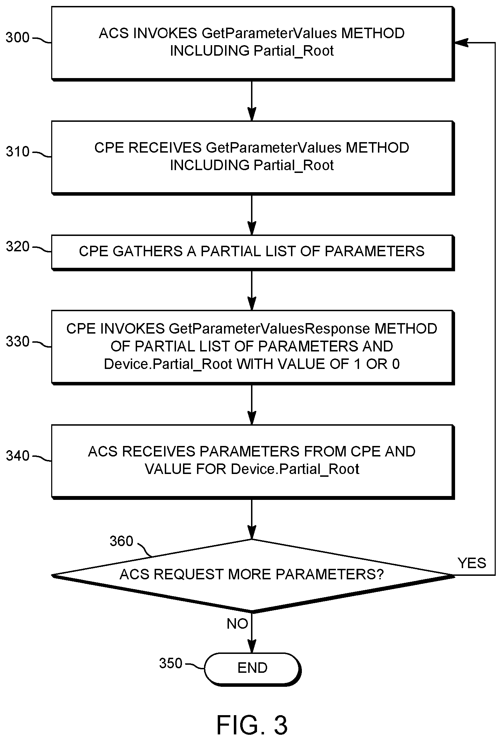

Referring to FIG. 3, it was determined that the GetParameterValues method from the ACS should include extended syntax to request a partial set of available parameters from the CPE 300. By way of example, the method may include "GetParametersValues.Device.Partial_Root". In this manner, the CPE will also receive "Partial Root" for the root object being requested 310. The CPE upon receiving the Partial_Root for the root object being requested will gather up only a partial list of all the parameters in the receiving CPE 320. The number of parameters that are gathered up by the CPE is a group selected by the CPE and not selected nor controlled by the ACS. The gathering up of the partial list is sufficiently short that it will not take a sufficiently long time that will exceed the timeout time of the ACS nor will it exhaust the resources of the CPE.

After the CPE gathers up a first partial list of parameters, the CPE may provide a GetParameterValuesResponse method that includes the first partial list of parameters of the CPE, and excludes the remaining parameters of the CPE 330. The GetParameterValuesResponse method also includes a Device.Partial_{_}Root with a value of 1. The Device.Partial_Root having a value of 1 provides a signal to the ACS that there are additional parameters that may be requested from the CPE.

The ACS receives the GetParameterValuesResponse method together with the Device.Partial_{_}Root having a value of 1 340. The ACS may determine if the desired parameters were returned by the CPE within the received partial list. If the ACS received the parameters that were desired, the transaction may end 350. If the ACS did not receive all the parameters that were desired 360, the ACS may again invoke the GetParameterValues method 300 to the CPE that includes the Device.Partial Root. The CPE receives the GetParameterValues method including the Partial_Root 310. The CPE gathers a second partial list of parameters 320 that are different than the first partial list of parameters. The CPE invokes GetParameterValuesResponse method together with the Device.Partial_Root having a value of 1 or 0 330. The Device.Partial_{_}Root having a value of 1 provides a signal that there are additional parameters that may be requested from the CPE. The Device.Partial_Root having a value of 0 provides a signal that there are no additional parameters that may be requested from the CPE that have not already been provided. The ACS receives the parameters from the CPE and the value for Device.Partial_Root 340. If the value for Device.Partial_Root is 0, then the ACS knows that no additional parameters are available to be requested. If the value for Device.Partial_{_}Root is 1, then the ACS knows that additional parameters are available to be requested 360, if desired. The process of requesting and providing a partial list of parameters may be repeated until the desired parameter has been received by the ACS or otherwise all of the parameters have been provided by the CPE to the ACS as a plurality of partial lists of parameters.

An exemplary sample for GetParameterValues for the root object is illustrated below:

```
 Device.InterfaceStackNumberOfEntries xsd:unsignedInt 90
 Device.DeviceInfo.X_CISCO _COM_FirmwareName xsd:string
 AR01.02.063_112319 _711.NCS.10
 Device.DeviceInfo.X_RDKCENTRAL-COM_ConfigureWiFi xsd:boolean false
 Device.DeviceInfo.X_RDKCENTRAL-COM_CaptivePortalEnable xsd:boolean false
 Device.DeviceInfo.X_DKCENTRAL-COM_CloudUICapable xsd:boolean true
 Device.DeviceInfo.X_RDKCENTRAL-COM_CloudUIEnable xsd:boolean false
 Device.DeviceInfo.X_RDKCENTRAL-COM_CloudUIWebURL xsd:string
 Device.DeviceInfo.X_COMCAST-COM_CM_MAC xsd:string 88:71:B1:DC:22:1A
 Device.DeviceInfo.X_COMCAST-COM_CM_IP xsd:string 10.91.68.145
 Device.DeviceInfo.X_COMCAST-COM_WAN_MAC xsd:string 88:71:b1:dc:22:1c
 Device.DeviceInfo.X_COMCAST-COM_WAN_IP xsd:string 10.91.68.144
 Device.DeviceInfo.X_COMCAST-COM_WAN_IPv6 xsd:string
 .....
 Device.DeviceInfo.X_COMCAST-COM_xfinitywifiCapableCPE xsd:boolean true
 Device.DeviceInfo.X_COMCAST-COM_AP_MAC xsd:string 88:71:b1:dc:22:1c
 Device.DeviceInfo.X_COMCAST_COM_xfinitywifiEnable xsd:boolean false
 Device.DeviceInfo.X_COMCAST-COM_rdkbPlatformCapable xsd:boolean true
 Device.DeviceInfo.TemperatureStatus.TemperatureSensorNumberOfEntries
 xsd:unsignedInt 3
 Device.DeviceInfo.TemperatureStatus.TemperatureSensor.1.Name xsd:string cpu
 Device.Devicelnfo. TemperatureStatus. TemperatureSensor. 1. Value xsd:int 81
 Device.DeviceInfo.TemperatureStatus.TemperatureSensor.1.MinValue xsd:int 66
 Device.DeviceInfo.TemperatureStatus.TemperatureSensor.1.MaxValue xsd:int 81
 Device.DeviceInfo.TemperatureStatus.TemperatureSensor.2.Name xsd:string clr2
 Device.DeviceInfo. TemperatureStatus. TemperatureSensor.2. Value xsd:int 0
 Device.DeviceInfo. TemperatureStatus. TemperatureSensor.2.Min Value xsd:int 1000
 .....
 evice.InterfaceStack.4.LowerLayer xsd:string Device.Bridging.Bridge.4.Port.1
 Device.InterfaceStack.4.HigherAlias xsd:string Guest Network 1
 Device.InterfaceStack.4.LowerAlias xsd:string Port1
 Device.InterfaceStack.5.HigherLayer xsd:string Device.Ethernet.Link.5
 Device.InterfaceStack.5.LowerLayer xsd:string Device.Bridging.Bridge.5.Port.1
 Device.InterfaceStack.5.HigherAlias xsd:string subnet 5
 Device.InterfaceStack.5.LowerAlias xsd:string Port1
 Device.InterfaceStack.6.HigherLayer xsd:string Device.Ethernet.Link.6
 Device.InterfaceStack.6.LowerLayer xsd:string Device.Bridging.Bridge.6.Port.1
 ....
 Device.MoCA.Interface.1.NodeTabooMask xsd:string 0000000000000000
 Device.MoCA.Interface.1.TxBeastRate xsd:unsignedInt 0
 Device.MoCA.Interface.1.TxBcastPowerReduction xsd:unsignedInt 0
 Device.MoCA.Interface.1.QAM256Capable xsd:boolean true
 Device.MoCA.Interface.1.PacketAggregationCapability xsd:unsignedInt 1
 Device.MoCA.Interface.1.AssociatedDeviceNumberOfEntries xsd:unsignedInt 0
```

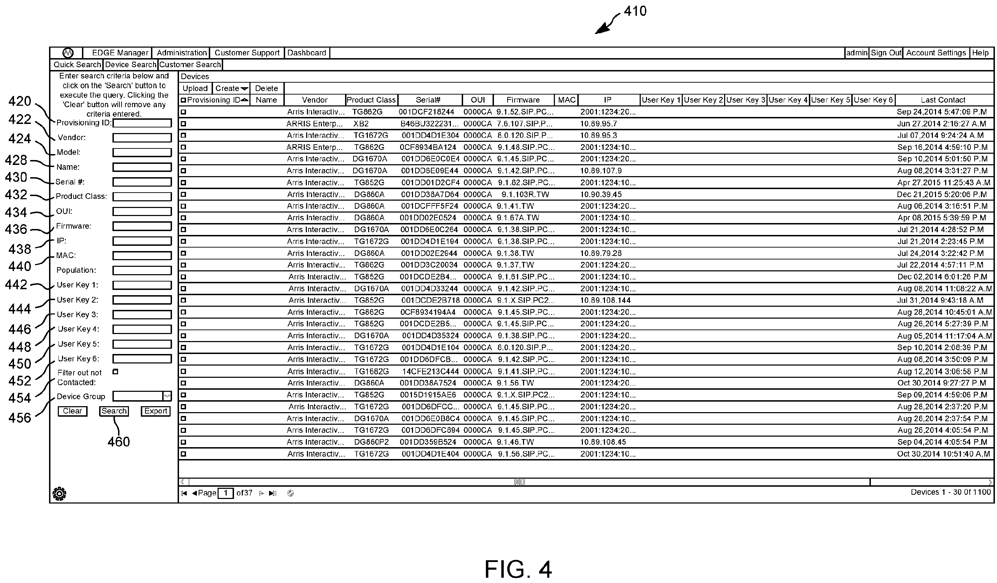

Referring to FIG. 1 and FIG. 4, a device management system 400 may be interconnected with a substantial number of consumer premises devices 120 to simply the delivery, the management, and the support of subscriber devices and services. Such a device management system 400 provides a unified view of the subscribers and management thereof. A database, a storage device including the database, a processor interconnected to the database, memory, and the storage device, together with a display that renders an interface 410 of data from the database thereon may be included with the device management system 400.

Each of the consumer premises devices 120 has a plurality of characteristics that may be used to identify it, where such characteristics are stored in the database on the device management system 400 and associated with a particular consumer premises device. The characteristics stored in the database may be queried so that a particular consumer premises device may be identified. The identified consumer premises equipment may then be managed and supported in a suitable manner through the interface 410. Some of the characteristics of each of the consumer premises devices 120 are unique while other characteristics of each of the consumer premises devices 120 may be shared by a plurality of such devices. For example, the characteristics may include various fields: Provisioning ID 420, Vendor 422, Model 424, Name 426, Serial # 428, Product Class 430, OUI 432, Firmware 434, IP 436, MAC 438, Population 440, User Key 1442, User Key 2 444, User Key 3 446, User Key 4 448, User Key 5 450, User Key 6 452, Filter out not Contacted 454, and Device Group 456. To locate a particular consumer premises equipment, an operator enters suitable information into a suitable entry, such as a serial number into the Serial # entry, then selecting Search 460. In this manner, there is a one-to-one correspondence between the search field and the field in the database including such information. For example, the entry in the Vendor 422 field would result in a search of the corresponding vendor fields in the database to search for one or more matches. The other fields work in a similar manner with the corresponding field and field in the database. Unfortunately, if an operator enters information that is properly included in a first entry (e.g., a serial number in the Serial # box) into a different entry (e.g., a serial number in the Model box), then select Search 460 the interface will not locate and render information related to the desired consumer premises equipment(s).

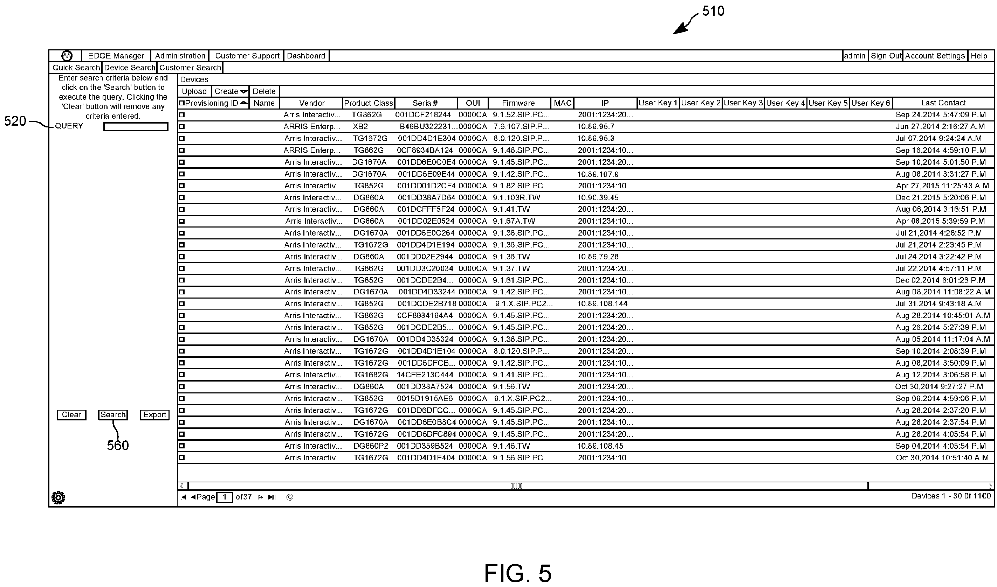

Referring to FIG. 5, the device management system 400 may include a modified interface 510. The modified interface 510 may include a single query 520 field where the operator enters their search query of the database. The device management system, database, storage, including any other components may be local or otherwise located on a network, including cloud computing and/or storage. The single query 520 field searches all of the relevant fields of the database, such as the Provisioning ID, the Vendor, the Model, the Name, the Serial#, the Product Class, the OUI, the Firmware, the IP, the MAC, the Population, the User Key 1, the User Key 2, the User Key 3, the User Key 4, the User Key 5, the User Key 6, the Filter out not Contacted, and the Device Group. In this manner, the operator enters information in the single query 520 field (e.g., a serial number in the Serial# box), then select Search 560 the interface will locate and render information related to the desired consumer premises equipment(s).

## Claims

1. A method for remote management of a plurality of consumer premises equipment (120) via a network (110) by use of an equipment management system (400), comprising:
said equipment management system including a processor and rendering on a display a field that accepts an input for a query by an operator associated with one or more of the plurality of consumer premises equipment;
said equipment management system maintaining an associated database of characteristics of the plurality of consumer premises equipment including a serial number (428), a model (424), and a firmware (434), wherein each of the plurality of consumer premises equipment is associated with at least a first characteristic (428) of the characteristics that is unique to each of the plurality of consumer premises equipment, and wherein at least a second characteristic (424) of the characteristics is shared between two or more of the plurality of consumer premises equipment;
said equipment management system searching said database based upon said input from said query from said operator that includes said serial number, said model, and said firmware, wherein there is a one-to-one correspondence between the input and at least one characteristic of the characteristics;
said equipment management system in response to determining a match based upon said query, rendering information regarding a matching consumer premises equipment on said display.

2. The method of claim 1, wherein said database further includes a provisioning identification (420), a vendor (422), a name (426), a product class (430), an internet protocol (436), and a medium access control (438).

3. The method of claim 2, wherein said equipment management system searches said database based upon said input from said query from said operator that includes said serial number, said model, said firmware, said provisioning identification, said vendor, said name, said product class, said internet protocol, and said medium access control.

## Patentansprüche

1. Verfahren für ein Fernverwalten einer Vielzahl von Verbraucherstandortgeräten (120) über ein Netzwerk (110) unter Verwendung eines Geräteverwaltungssystems (400), umfassend:
das Geräteverwaltungssystem, das einen Prozessor umfasst und ein Feld auf einer Anzeige darstellt, das eine Eingabe für eine Abfrage durch einen Bediener annimmt, der einem oder mehreren der Vielzahl von Verbraucherstandortgeräten zugeordnet ist;
das Geräteverwaltungssystem, das eine zugeordnete Datenbank von Merkmalen der Vielzahl von Verbraucherstandortgeräten verwaltet, einschließlich einer Seriennummer (428), eines Modells (424) und einer Firmware (434), wobei jedes der Vielzahl von Verbraucherstandortgeräten mindestens einem ersten Merkmal (428) der Merkmale zugeordnet ist, das für jedes der Vielzahl von Verbraucherstandortgeräten eindeutig ist, und wobei mindestens ein zweites Merkmal (424) der Merkmale von zwei oder mehr der Vielzahl von Verbraucherstandortgeräten gemeinsam genutzt wird;
das Geräteverwaltungssystem, das die Datenbank basierend auf der Eingabe aus der Abfrage des Bedieners, die die Seriennummer, das Modell und die Firmware umfasst, durchsucht, wobei es eine Eins-zu-Eins-Entsprechung zwischen der Eingabe und mindestens einem Merkmal der Merkmale gibt;
das Geräteverwaltungssystem, das in Reaktion auf das Bestimmen einer Übereinstimmung basierend auf der Abfrage Informationen über ein übereinstimmendes Verbraucherstandortgerät auf der Anzeige darstellt.

2. Verfahren nach Anspruch **1,** wobei die Datenbank ferner eine Bereitstellungskennung (420), einen Anbieter (422), einen Namen (426), eine Produktklasse (430), ein Internetprotokoll (436) und eine Medienzugriffssteuerung (438) umfasst.

3. Verfahren nach Anspruch 2, wobei das Geräteverwaltungssystem die Datenbank basierend auf der Eingabe der Abfrage des Bedieners, die die Seriennummer, das Modell, die Firmware, die Bereitstellungskennung, den Hersteller, den Namen, die Produktklasse, das Internetprotokoll und die Medienzugriffssteuerung umfasst, durchsucht.

## Revendications

1. Procédé pour la gestion à distance d'une pluralité d'équipements de locaux de consommateurs (120) via un réseau (110) en utilisant un système de gestion d'équipements (400), comprenant :
ledit système de gestion d'équipements comprenant un processeur et le rendu sur un affichage d'un champ qui accepte une entrée pour une interrogation par un opérateur associé à un ou plusieurs parmi la pluralité d'équipements de locaux de consommateurs ;
ledit système de gestion d'équipements tenant à jour une base de données associée de caractéristiques de la pluralité d'équipements de locaux de consommateurs comprenant un numéro de série (428), un modèle (424) et un micrologiciel (434), dans lequel chacun de la pluralité d'équipements de locaux de consommateurs est associé à l'au moins une première caractéristique (428) parmi les caractéristiques qui est unique à chacun de la pluralité d'équipements de locaux de consommateurs, et dans lequel au moins une deuxième caractéristique (424) parmi les caractéristiques est partagée entre deux ou plus parmi la pluralité d'équipements de locaux de consommateurs ;
ledit système de gestion d'équipement recherchant ladite base de données sur la base de ladite entrée à partir de ladite interrogation provenant dudit opérateur qui comprend ledit numéro de série, ledit modèle et ledit micrologiciel, dans lequel il existe une correspondance bijective entre l'entrée et l'au moins une caractéristique parmi les caractéristiques ;
ledit système de gestion d'équipements, en réponse à la détermination d'une concordance sur la base de ladite interrogation, rendant des informations concernant un équipement de local de consommateur qui concorde sur ledit affichage.

2. Procédé selon la revendication 1, dans lequel ladite base de données comprend en outre une identification d'approvisionnement (420), un vendeur (422), un nom (426), une classe de produits (430), un protocole Internet (436) et un contrôle d'accès au support (438).

3. Procédé selon la revendication 2, dans lequel ledit système de gestion d'équipements recherche ladite base de données sur la base de ladite entrée provenant de ladite interrogation provenant dudit opérateur qui comprend ledit numéro de série, ledit modèle, ledit micrologiciel, ladite identification d'approvisionnement, ledit vendeur, ledit nom, ladite classe de produit, ledit protocole Internet et ledit contrôle d'accès au support.
